(19) Europäisches Patentamt
European Patent Office
Office européen des brevets

(11) **EP 4 640 872 A1**

(12) **EUROPEAN PATENT APPLICATION**
published in accordance with Art. 153(4) EPC

(43) Date of publication:
**29.10.2025 Bulletin 2025/44**

(21) Application number: **23907457.8**

(22) Date of filing: **24.11.2023**

(51) International Patent Classification (IPC):
*C22C 38/02* (2006.01)    *C22C 38/04* (2006.01)
*C22C 38/06* (2006.01)    *C22C 38/58* (2006.01)
*C22C 38/12* (2006.01)    *C21D 8/12* (2006.01)
*B32B 15/01* (2006.01)

(52) Cooperative Patent Classification (CPC):
**B32B 15/01; C21D 8/12; C22C 38/02; C22C 38/04;
C22C 38/06; C22C 38/12; C22C 38/58; H02K 3/04**

(86) International application number:
**PCT/KR2023/019106**

(87) International publication number:
**WO 2024/136171 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022 KR 20220180190**

(71) Applicant: POSCO Co., Ltd
**Pohang-si, Gyeongsangbuk-do 37859 (KR)**

(72) Inventors:
• **KIM, Jaehoon**
  **Pohang-si, Gyeongsangbuk-do 37859 (KR)**
• **KIM, Seungil**
  **Pohang-si, Gyeongsangbuk-do 37859 (KR)**
• **KIM, Wonjin**
  **Pohang-si, Gyeongsangbuk-do 37859 (KR)**

(74) Representative: **Meissner Bolte Partnerschaft
mbB
Patentanwälte Rechtsanwälte
Postfach 86 06 24
81633 München (DE)**

(54) **NON-ORIENTED ELECTRICAL STEEL SHEET, METHOD FOR MANUFACTURING SAME, AND MOTOR CORE COMPRISING SAME**

(57)    A non-oriented electrical steel sheet according to an embodiment of the present invention includes, in wt%, Si: 2.8 to 4.0%, Al: 0.5 to 1.7%, and Mn: 0.3 to 2.0%, with the balance being Fe and inevitable impurities. In addition, a surface layer exists from a surface of the steel sheet toward the inside of the steel sheet, an insulating coating layer exists on the surface of the steel sheet, and the insulating coating layer and the surface layer have a weight ratio (Al/Mn) of Al to Mn of 1 to 10.

## FIG. 1

**Description**

**[Technical Field]**

An embodiment of the present invention relates to a non-oriented electrical steel sheet, a method for manufacturing the same, and a motor core including the same. Specifically, an embodiment of the present invention relates to a non-oriented electrical steel sheet in which a surface layer formed on a steel sheet is controlled by appropriately controlling a dew point temperature during a stress relief annealing (SRA) process, a method for manufacturing the same, and a motor core including the same.

**[Background Art]**

Recently, as disasters caused by climate change increase, countries around the world are announcing roadmaps for achieving carbon neutrality by 2050. 'The total amount of carbon emissions in 2020 reached 39 billion tons, of which internal combustion engines accounted for 24%, or 9.4 billion tons. Therefore, there is a strong demand to achieve carbon neutrality in this field through the electrification of internal combustion engines. To this end, electrification is progressing rapidly in the mobility sector, led by electric vehicles. The characteristics required for driving motors in new mobility are to increase driving range and improve top speed. This is directly related to the low core loss characteristics of electrical steel sheets. If the core loss of electrical steel sheets is low, efficiency may be further improved, thereby increasing the driving range. Therefore, high-frequency low core loss characteristics of electrical steel sheets are essential, and for this purpose, the electrical steel sheets typically contain a large amount of Si and add a large amount of elements such as Al, Mn, and Cr to secure the high-frequency low core loss.

However, in addition to adding a large amount of specific resistance elements such as Si, Al, Mn, and Cr to lower iron loss, it is necessary to increase strength by refining the grain size or leaving an unrecrystallized portion, and then improve iron loss by growing the grain size through the SRA process.

**[Disclosure]**

[Technical Problem]

An embodiment of the present invention attempts to provide a non-oriented electrical steel sheet, a method for manufacturing the same, and a motor core including the same. Specifically, an embodiment of the present invention attempts to provide to a non-oriented electrical steel sheet in which a surface layer formed on a steel sheet is controlled by appropriately controlling a dew point temperature during a stress relief annealing (SRA) process, a method for manufacturing the same, and a motor core including the same.

[Technical Solution]

A non-oriented electrical steel sheet according to an embodiment of the present invention includes, in wt%, Si: 2.8 to 4.0%, Al: 0.5 to 1.7%, and Mn: 0.3 to 2.0%, with the balance being Fe and inevitable impurities. In addition, a surface layer exists from a surface of the steel sheet toward the inside of the steel sheet, an insulating coating layer exists on the surface of the steel sheet, and the insulating coating layer and the surface layer have a weight ratio (Al/Mn) of Al to Mn of 1 to 10.

The non-oriented electrical steel sheet according to the embodiment of the present invention may further include one or more of C, N, S, Ti, Nb, and V, each in an amount of 0.005 wt% or less.

The non-oriented electrical steel sheet according to the embodiment of the present invention may further include one or more of P: 0.005 wt% or less, Cu: 0.005 to 0.2 wt%, Cr: 0.01 to 0.5 wt%, Sn: 0.06 wt% or less, Sb: 0.06 wt% or less, Ni: 0.05 wt% or less, and Zn: 0.01 wt% or less.

The non-oriented electrical steel sheet according to the embodiment of the present invention may further include 0.200 wt% or less in each or a combined amount of one or two or more of Bi, Pb, Ge, and As.

The non-oriented electrical steel sheet according to the embodiment of the present invention may further include one or more of Mo: 0.03 wt% or less, B: 0.0050 wt% or less, Ca: 0.0050 wt% or less, and Mg: 0.0050 wt% or less.

The non-oriented electrical steel sheet according to the embodiment of the present invention may have a specific resistance of 50 $\mu\Omega\cdot$cm or more.

The non-oriented electrical steel sheet according to the embodiment of the present invention may have an average grain size of 50 to 200 $\mu$m.

Another embodiment of the present invention provides a method for manufacturing a non-oriented electrical steel sheet, including: a step of hot rolling a slab including, in wt%, Si: 2.8 to 4.0%, Al: 0.5 to 1.7%, and Mn: 0.3 to 2.0%, with the balance being Fe and inevitable impurities, to manufacture a hot-rolled sheet; a step of cold rolling the hot-rolled sheet to manufacture a cold-rolled sheet; a cold-rolled sheet annealing step of annealing the cold-rolled sheet; a step of forming an insulating coating layer on the annealed cold-rolled sheet; and a step of stress relief annealing the steel sheet with the insulating coating layer formed thereon.

The step of stress relief annealing includes a heating step of heating the steel sheet to a soaking temperature and a soaking step, a heating rate in a temperature range of 300 to 500°C in the heating step is 10 to 50°C/min, and a dew point of the heating step is 10°C to 50°C, and a dew point of the soaking step is 0 to 35°C.

The slab may further include one or more of C, N, S, Ti, Nb, and V, each in an amount of 0.005 wt% or less.

The slab may further include one or more of P: 0.005 wt% or less, Cu: 0.005 to 0.2 wt%, Cr: 0.01 to 0.5 wt%, Sn: 0.06 wt% or less, Sb: 0.06 wt% or less, Ni: 0.05 wt% or less, and Zn: 0.01 wt% or less.

The slab may further include 0.200 wt% or less in each or a combined amount of one or two or more of Bi, Pb, Ge, and As.

The slab may further include one or more of Mo: 0.03 wt% or less, B: 0.0050 wt% or less, Ca: 0.0050 wt% or less, and Mg: 0.0050 wt% or less.

In the annealing step of the cold-rolled sheet, an annealing temperature may be in the range of 750 to 850°C, and an annealing time may be in the range of 10 to 60 seconds.

After the annealing step of the cold-rolled sheet, the annealed cold-rolled sheet may have an average grain size of 10 to 30 $\mu$m.

After the annealing step of the cold-rolled sheet, an unrecrystallization fraction may be 1 to 15 area%.

After the annealing step of the cold-rolled sheet, a surface layer may exist from a surface of the cold-rolled sheet toward the inside of the cold-rolled sheet, and a thickness of the surface layer may be 0.0001 to 0.2 $\mu$m.

After the annealing step of the cold-rolled sheet, Formula 1 may be satisfied:

50 $\leq$ [Average Grain Size ($\mu$m)] $\times$ [Cold-Rolled Sheet Annealing Time (seconds)]/[Unrecrystallized Area Fraction (%)] $\leq$ 500    [Formula 1]

A heating rate and a dew point in the heating step may satisfy Formula 2:

$$[\text{Formula 2}]$$

$$0.7 \leq [\text{Heating Rate (°C/min)}] / [\text{Dew Point (°C)}] \leq 2.5$$

Another embodiment of the present invention provides a motor core including: a rotor formed by stacking a plurality of non-oriented electrical steel sheets and a stator formed by stacking a plurality of non-oriented electrical steel sheets, wherein the non-oriented electrical steel sheet in the rotor includes, in wt%, Si: 2.8 to 4.0%, Al: 0.5 to 1.7%, and Mn: 0.3 to 2.0%, with the balance being Fe and inevitable impurities, the non-oriented electrical steel sheet in the stator includes, in wt%, Si: 2.8 to 4.0%, Al: 0.5 to 1.7%, and Mn: 0.3 to 2.0%, with the balance being Fe and inevitable impurities, a surface layer exists from a surface of the steel sheet in an inward direction of the steel sheet, and an insulating coating layer exists on the surface of the steel sheet, and the insulating coating layer and the surface layer have a weight ratio (Al/Mn) of Al to Mn of 1 to 10.

The non-oriented electrical steel sheet in the rotor may have an average grain size of 10 to 30 $\mu$m.

A difference in Si, Al, and Mn contents between the non-oriented electrical steel sheets included in the stator and the rotor may be each 0.2 wt% or less.

[Advantageous Effects]

The non-oriented electrical steel sheet according to an embodiment of the present invention has uniformly excellent tensile strength after cold-rolled sheet annealing.

In addition, the non-oriented electrical steel sheet according to an embodiment of the present invention has excellent core loss and insulation properties after SRA.

Ultimately, the non-oriented electrical steel sheet according to an embodiment of the present invention contributes to the manufacture of environmentally-friendly vehicle motors, high-efficiency home appliance motors, and super premium-grade motor cores by using the same steel sheet as a rotor without SRA treatment and as a stator after SRA treatment.

**[Description of the Drawing]**

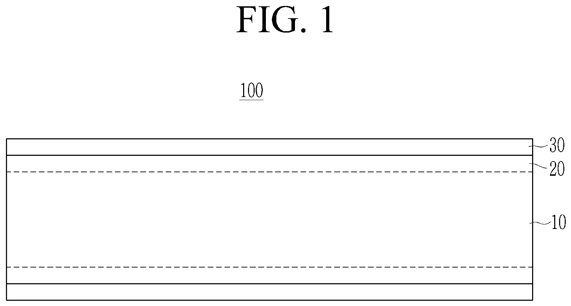

FIG. 1 is a schematic side cross-sectional view of a non-oriented electrical steel sheet according to an embodiment of the present invention.

**[Mode for Invention]**

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Therefore, a first part, component, area, layer, or section to be described below may be referred to as second part, component, area, layer, or section within the range of the present invention.

The technical terms used herein are to simply mention a particular embodiment and are not meant to limit the present invention. An expression used in the singular encompasses an expression of the plural, unless it has a clearly different meaning in the context. In the specification, it is to be understood that the terms such as "including", "having", etc., are intended to indicate the existence of specific features, regions, numbers, stages, operations, elements, components, and/or combinations thereof disclosed in the specification, and are not intended to preclude the possibility that one or more other features, regions, numbers, stages, operations, elements, components, and/or combinations thereof may exist or may be added.

When referring to a part as being "on" or "above" another part, it may be positioned directly on or above the other part, or another part may be interposed therebetween. In contrast, when referring to a part being "directly above" another part, no other part is interposed therebetween.

Unless otherwise defined, all terms used herein, including technical or scientific terms, have the same meanings as those generally understood by those with ordinary knowledge in the field of art to which the present invention belongs. Terms defined in commonly used dictionaries are further interpreted as having meanings consistent with the relevant technical literature and the present disclosure, and are not to be construed as having idealized or very formal meanings unless defined otherwise.

Unless otherwise stated, % represents wt%, and 1 ppm is 0.0001 wt%.

In embodiments of the present invention, inclusion of an additional element means replacing the remaining iron (Fe) by an additional amount of the additional elements.

The present invention will be described more fully hereinafter with reference to the accompanying drawings, in which embodiments of the invention are shown. As those skilled in the art would realize, the described embodiments may be modified in various different ways, all without departing from the spirit or scope of the present disclosure.

In an embodiment of the present invention, by appropriately controlling a dew point temperature during a stress relief annealing (SRA) process, a surface layer and an insulating coating layer formed on the steel sheet are controlled to simultaneously improve iron loss and insulation.

A non-oriented electrical steel sheet according to an embodiment of the present invention includes, in wt%, Si: 2.8 to 4.0%, Al: 0.5 to 1.7%, and Mn: 0.3 to 2.0%, with the balance being Fe and inevitable impurities.

First, the reason for limiting the components of the non-oriented electrical steel sheet will be described.

Si: 2.8 to 4.0 wt%

Silicon (Si) serves to increase the specific resistance of the material and reduce iron loss, so it must be added in relatively large amounts. If too little Si is added, an effect of improving high-frequency iron loss may be insufficient. If too much Si is added, the hardness of the material increases, which is undesirable because it deteriorates productivity and punching performance. More specifically, Si may be included in an amount of 3.0 to 3.7 wt%.

Al: 0.5 to 1.7 wt%

Aluminum (Al) serves to increase the specific resistance of the material and reduce iron loss, so it must be added in a large amount. If too little Al is added, it is ineffective in reducing high-frequency iron loss and fine nitrides may form, which may deteriorate magnetism. If too much Al is added, it can cause problems by changing the properties of mold flux during the continuous casting process, which may significantly reduce productivity. More specifically, Al may be included in an amount of 0.7 to 1.5 wt%.

Mn: 0.3 to 2.0 wt%

Manganese (Mn) improves the iron loss by increasing the specific resistance of the material and serves to form a sulfide. If too little Mn is added, fine MnS may precipitate, which may deteriorate the magnetism. If too much Mn is added, it may promote the formation of [111] texture, which is unfavorable for magnetism, and cause a rapid decrease in magnetic flux density. Specifically, Mn may be included in an amount of 0.5 to 1.5 wt%.

Specific Resistance: 50 $\mu\Omega\cdot$cm or more

The higher the specific resistance, the better for reducing eddy current loss in a high-frequency rotating machine, but if it is too high, the magnetic flux density may be degraded. In an embodiment of the present invention, the specific resistance may be calculated from "13.25 + 11.3$\times$([Si]+[Al]+[Mn]/2)". Wherein [Si], [Al], and [Mn] represent the contents (wt%) of Si, Al, and Mn, respectively. The higher the specific resistance, the more it plays a role in lowering iron loss. If the specific resistance is too low, the iron loss is poor and it is difficult to use it as a high-efficiency motor. More specifically, the specific resistance may be in the range of 50 to 90 $\mu\Omega\cdot$cm. More specifically, the specific resistance may be in the range of 60 to 85 $\mu\Omega\cdot$cm.

A non-oriented electrical steel sheet according to an embodiment of the present invention may further include at least one of P: 0.005 wt% or less, Cu: 0.005 to 0.2 wt%, Cr: 0.01 to 0.5 wt%, Sn: 0.06 wt% or less, Sb: 0.06 wt% or less, Ni: 0.05 wt% or less, and Zn: 0.01 wt% or less.

P at 0.005 wt% or less

Phosphorus (P) is a grain boundary segregation element, and if added in excessive amounts, it may delay recrystallization, thereby deteriorating the strength uniformity in the rolling direction and the direction perpendicular to the rolling direction. More specifically, P may be included in an amount of 0.0001 to 0.0030 wt%.

Cu: 0.005 to 0.200 wt%

Copper (Cu) serves to form sulfides together with Mn. If Cu is added further, if too little Cu is added, CuMnS may be finely precipitated and magnetism may be degraded. **If** too much Cu is added, high temperature brittleness occurs, which may form cracks during casting or hot rolling. More specifically, Cu may be included in an amount of 0.01 to 0.10 wt%.

Cr: 0.010 to 0.50 wt%

Chromium (Cr) serves to improve iron loss by increasing specific resistance. **If** too little Cr is added, an effect of specific resistance may not be sufficient. **If** too much Cr is included, the magnetic flux density may deteriorate. More specifically, when Cr is further included, 0.050 to 0.20 wt% of Cr may be included.

Sn: 0.06 wt% or less

Tin (Sn) is added as a segregating element at grain boundaries to suppress nitrogen diffusion through grain boundaries, suppress {111} texture that is detrimental to magnetism, and increase favorable {100} texture, thereby improving magnetic properties. If too much Sn is added, grain growth is hindered, which reduces magnetism and results in poor rolling properties. Therefore, Sb may be added within the above-mentioned range. More specifically, it may be included in an amount of 0.005 to 0.060 wt%. More specifically, it may be included in an amount of 0.01 to 0.05 wt%.

Sb: 0.06 wt% or less

Antimony (Sb) is added as a segregating element at grain boundaries to suppress nitrogen diffusion through grain boundaries, suppress {111} texture that is detrimental to magnetism, and increase favorable {100} texture, thereby improving magnetic properties. If too much Sb is added, grain growth is hindered, which reduces magnetism and results in poor rolling properties. Therefore, Sb may be added within the above-mentioned range. More specifically, it may be included in an amount of 0.005 to 0.060 wt%. More specifically, it may be included in an amount of 0.01 to 0.05 wt%.

Ni: 0.05 wt% or less

Nickel (Ni) may react with impurity elements to form fine sulfides, carbides, and nitrides, which may have a detrimental effect on magnetism. More specifically, Ni may be included in an amount of 0.001 to 0.03 wt%.

Zn: 0.01 wt% or less

If the content of zinc (Zn) is excessive, it may act as an impurity and deteriorate magnetism. Therefore, Zn may be further added within the above-mentioned range. More specifically, it may be included in an amount of 0.001 to 0.005 wt%.

A non-oriented electrical steel sheet according to an embodiment of the present invention may further include 0.200 wt% or less of one or more of Bi, Pb, Ge, and As, individually or in a combined amount.

The aforementioned elements, when additionally added, segregate at grain boundaries, thereby alleviating stress concentration at grain boundaries during cold rolling, thereby suppressing recrystallization of <111>//ND oriented grains in the subsequent recrystallization annealing process, thereby improving the magnetic flux density. If these are added appropriately, the aforementioned effects may be additionally obtained, but if they are included in too much, a large amount of segregation may occur, inhibiting grain growth and resulting in lower magnetic flux density and iron loss. More specifically, it may further include 0.0001 to 0.200 wt% of each or a combined amount of one or more of Bi, Pb, Ge, and As. More specifically, it may further include 0.001 to 0.100 wt%. It may further include 0.005 to 0.050 wt%.

A non-oriented electrical steel sheet according to an embodiment of the present invention may further include at least one of Mo: 0.03 wt% or less, B: 0.0050 wt% or less, Ca: 0.0050 wt% or less, and Mg: 0.0050 wt% or less.

Since these may react with C, S, N, and the like, which are inevitably included, to form fine carbides, nitrides, or sulfides, which may adversely affect magnetism, the upper limit may be limited as described above.

Other Impurities

In addition to the aforementioned elements, inevitably mixed impurities such as carbon (C), sulfur (S), nitrogen (N), titanium (Ti), niobium (Nb), and vanadium (V) may be included.

C, N, and Ti may be limited because they form carbonitrides and hinder magnetic domain movement, and S may form sulfides and thus lower grain growth, which may limit its upper limit. Each of these elements may be included in an amount of 0.0050 wt% or less.

N combines with Ti, Nb, and V to form nitrides and serves to reduce grain growth.

C reacts with N, Ti, Nb, and V to form fine carbides, which hinder grain growth and magnetic domain movement.

S forms sulfides, which degrade grain growth.

As described above, when impurity elements are further included, one or more of C, S, N, Ti, Nb, and V may be included at 0.005 wt% or less each.

A non-oriented electrical steel sheet according to an embodiment of the present invention may have an average grain size of 50 to 200 $\mu$m. When the average grain size is appropriately adjusted, magnetism may be further improved. In an embodiment of the present invention, the grain size may be measured on a plane parallel to the sheet surface. More specifically, it may be measured at a thickness ranging from 1/4t to 3/4t with respect to the total thickness t of the steel sheet. The grain size is determined by assuming a virtual circle with an area equal to the grain area, and the diameter of this circle is taken as the grain size. The average grain size may be measured by dividing the area of the measurement target by the number of grains within that area. More specifically, the non-oriented electrical steel sheet according to an embodiment of the present invention may have an average grain size of 60 to 150 $\mu$m. In an embodiment of the present invention, the average grain size without separate description refers to the average grain size after SRA.

FIG. 1 illustrates a schematic side cross-sectional view of a non-oriented electrical steel sheet according to an embodiment of the present invention. The non-oriented electrical steel sheet of FIG. 1 is only for illustrating the present invention, and the present invention is not limited thereto. Therefore, the structure of the non-oriented electrical steel sheet may be variously modified.

As shown in FIG. 1, a non-oriented electrical steel sheet 100 according to an embodiment of the present invention includes a surface layer 20 and a steel sheet base material 10 other than the surface layer, from the surface of the steel sheet toward the inside of the steel sheet. An insulating coating layer 30 is present on the surface of the steel sheet.

In the embodiment of the present invention, the insulating coating layer 30 and the surface layer 20 are composed of Al and Mn oxides. When Al and Mn oxides are appropriately formed in the insulating coating layer 30 and the surface layer 20 during stress relief annealing, both insulation and magnetism may be improved. The insulating coating layer 30 may be mainly composed of Mn oxide, and the surface layer 20 may be mainly composed of Al oxide.

In the embodiment of the present invention, the insulating coating layer 30 and the surface layer 20 may have a weight ratio (Al/Mn) of Al to Mn of 10 or less. If Mn in the insulating coating layer 30 is too small and the Al/Mn ratio is too high, the bonding strength between the insulating coating layer 30 and the surface layer 20 may be weakened. More specifically, the insulating coating layer 30 and the surface layer 20 may have a weight ratio (Al/Mn) of Al to Mn of 1 to 8.

The Mn and Al contents in the insulating coating layer 30 and the surface layer 20 may be measured using GDS. The amounts of Al and Mn may be defined as the area of the GDS peak. The boundary between the surface layer 20 and the steel sheet base material 10 may be defined as the intersection of the point where the oxygen peak decreases and the point where the Fe peak increases.

The distinction between the insulating coating layer 30 and the surface layer 20 is unnecessary in an embodiment of the present invention, but it may be defined as an inflection point where the slope of the Al peak changes.

The Al and Mn contents in the insulating coating layer 30 and the surface layer 20 may be appropriately formed by controlling the heating rate and dew point during the stress relief annealing process, which will be specifically described in the manufacturing method of the non-oriented electrical steel sheet described later.

Specifically, the non-oriented electrical steel sheet according to the embodiment of the present invention may have an insulation value of 500 mA or more. More specifically, the insulation value may be 550 to 900 mA. The insulation value may be measured by the Franklin test method.

In addition, the non-oriented electrical steel sheet according to the embodiment of the present invention may have an iron loss ($_{10/400}$) of 10.50 W/kg or less. More specifically, it may be 9.0 to 10.0 W/kg. Magnetism may be measured using the Epstein method or the single sheet test (SST). In this case, the thickness can be 0.25 mm reference.

A method for manufacturing a non-oriented electrical steel sheet according to an embodiment of the present invention includes: a step of hot rolling a slab including, in wt%, Si: 2.8 to 4.0%, Al: 0.5 to 1.7%, and Mn: 0.3 to 2.0%, with the balance being Fe and inevitable impurities, to manufacture a hot-rolled sheet; a step of cold rolling the hot-rolled sheet to manufacture a cold-rolled sheet; a cold-rolled sheet annealing step for the cold-rolled sheet; and a stress relief annealing step for the annealed cold-rolled sheet.

Hereinafter, respective steps will be specifically described.

First, the slab is manufactured. The reason for limiting the addition ratio of each composition in the slab is the same as the reason for limiting the composition of the non-oriented electrical steel sheet described above, so a repeated description will be omitted. Since the slab composition is not substantially changed during manufacturing processes such as hot rolling, hot-rolled sheet annealing, cold rolling, cold-rolled sheet annealing, and stress relief annealing, which will be described later, the composition of the slab and the composition of the non-oriented electrical steel sheet are substantially the same.

The slab may be heated before the step of manufacturing the hot-rolled sheet. Specifically, the slab is fed into a heating furnace and heated to 1100 to 1,250°C. When heated at a temperature exceeding 1250 °C, a precipitate may be redissolved, and it may be finely precipitated after the hot-rolling.

The heated slab is hot-rolled to 2 to 2.3 mm to manufacture a hot-rolled sheet. In the step of manufacturing the hot-rolled sheet, a finish rolling temperature may be 800 to 1,000 °C.

After the step of manufacturing the hot-rolled sheet, hot-rolled-sheet-annealing the hot-rolled sheet may be further included. In this case, a temperature of the hot-rolled sheet-annealing may be 850 to 1150 °C. If the temperature of the hot-rolled sheet annealing is lower than 850°C, there is little effect of increasing the magnetic flux density because the structure does not grow, or finely grows, and if the temperature of the annealing exceeds 1,150°C, magnetic properties are rather deteriorated, and rolling workability may be deteriorated due to deformation of a shape of the sheet. More specifically, the annealing temperature may be 950 to 1125 °C. More specifically, the annealing temperature of the hot-rolled sheet is 900 to 1100°C. The hot-rolled sheet annealing is performed in order to increase the orientation favorable to magnetism as required, and it may be omitted.

Next, the hot-rolled sheet is pickled and then cold-rolled to have a predetermined sheet thickness. Although It may be applied differently depending on the thickness of the hot-rolled sheet, but the cold rolling may be performed so that the final thickness thereof becomes 0.2 to 0.65 mm, by applying a reduction ratio of 70 to 95 %. To match the reduction ratio, one cold rolling or two or more cold rollings with intermediate annealing may be performed.

The cold-rolled sheet is subjected to cold-rolled sheet annealing.

In the cold-rolled sheet annealing step, the annealing temperature may be in the range of 750 to 850°C, and the annealing time may be in the range of 10 to 60 seconds. As the annealing temperature increases and the soaking time increases, the unrecrystallized portion disappears, the average grain size increases, sufficient strength may not be secured, and the strength uniformity in each direction may deteriorate. If the annealing temperature is low and the soaking time is short, the grains may not grow properly, which may result in poor magnetism. More specifically, in the cold-rolled sheet annealing step, the annealing temperature may be in the range of 7700 to 830°C, and the annealing time may be in the range of 20 to 45 seconds.

After annealing the cold-rolled sheet, the annealed cold-rolled sheet may have an average grain size of 10 to 30 $\mu$m. When the average grain size of the cold-rolled sheet is appropriately formed, both magnetism and strength may be secured. The cold-rolled sheet may have an average grain size of 15 to 25 $\mu$m.

After annealing the cold-rolled sheet, the fraction of unrecrystallized grains may be in the range of 1 to 15 area%. When the unrecrystallized grains of the cold-rolled sheet are appropriately formed, both magnetism and strength may be secured. In an embodiment of the present invention, unrecrystallized grains may be distinguished from spherical-shaped recrystallized grains by the grain size being elongated like elongated grains when observed in tissue. More specifically, the fraction of unrecrystallized grains may be in the range of 3 to 13 area%.

After annealing of the cold-rolled sheet, a surface layer may be present from the surface of the cold-rolled sheet toward the inside of the cold-rolled sheet, and the thickness of the surface layer may be 0.001 to 0.2 $\mu$m. The surface layer

may be formed due to partial oxidation of the steel sheet surface during the annealing process of the cold-rolled sheet. More specifically, the thickness of the surface layer may be in the range of 0.01 to 0.1 $\mu$m.

After annealing of the cold-rolled sheet, the difference in tensile strength between the rolling direction and other directions may be 15 MPa or less, so that uniformity of tensile strength (ratio of tensile strength in the rolling direction/-tensile strength in the 45-degree direction >98%) may be secured.

After annealing of the cold-rolled sheet, the following Formula 1 may be satisfied.

$50 \leq$ [Average Grain Size ($\mu$m)] $\times$ [Cold-Rolled Sheet Annealing Time (seconds)]/[Unrecrystallized Area Fraction (%)] $\leq 500$     [Formula 1]

When Formula 1 is satisfied, a tensile strength of 630 MPa or more may be obtained, and the strength ratio by direction (tensile strength in the rolling direction/tensile strength in the 45 degree direction) may be uniform at 98.0% or more.

Next, an insulating coating layer is formed on the annealed cold-rolled sheet. Since the method of forming an insulating coating layer is widely known, a detailed description thereof is omitted. Specifically, the insulation coating layer may be formed by applying an insulating coating layer forming composition containing metal phosphate and silica as main components, and then performing heat treatment. In an embodiment of the present invention, since Mn in the steel sheet diffuses into the insulating coating layer during the stress relief annealing process, the Mn content in the insulating coating layer after forming the insulating coating layer may be very low. Specifically, it may be 0.01 wt% or less.

Next, the steel sheet with the insulating coating layer formed thereon is subjected to stress relief annealing. After forming the insulating film, punching and stacking processes may be performed. Since this is widely known, a detailed description thereof will be omitted. During the punching process, stress is generated in the non-oriented electrical steel sheet, which adversely affects the magnetism of the non-oriented electrical steel sheet. In the case of a stator, where magnetic properties are relatively important in a motor core, stress remaining in the steel sheet is removed through stress relief annealing to improve the magnetism of the steel sheet. On the other hand, in the case of a rotor, where strength characteristics are relatively important than magnetism, stress relief annealing may be omitted.

That is, even using the same steel sheet, it can be used for different purposes as a stator and a rotor depending on the presence or absence of stress relief annealing.

The stress relief annealing step includes a heating step of heating the steel sheet to a soaking temperature and a soaking step, wherein the heating step has a heating rate of 10°C/min or more in the range of 300 to 500°C, the dew point of the heating step is 10°C to 50°C, and the dew point of the soaking step is 10°C or more. Under the conditions described above, an appropriate insulating coating layer 30 and surface layer 20 are formed, thereby improving both insulation and magnetism.

The heating step is a step where the steel sheet is heated to the soaking temperature. The starting temperature thereof is not particularly limited, but may be room temperature (25°C) to 300°C. In the heating step, the heating rate in the range of 300 to 500°C may be 10°C/min or more. The heating rate must be properly secured so that Al and Mn may be properly included in the insulating coating layer and surface layer. More specifically, the heating rate in the range of 300 to 500°C in the heating step may be 10°C/min to 50°C/min.

The dew point in the heating step is 10°C to 50°C. If the dew point is too low, the surface layer 20 may not be formed appropriately. If the dew point is too high, a large amount of Al and Mn oxides are formed in the coating layer and the surface layer 20, and internal oxidation of the base iron becomes severe, which may deteriorate magnetism. More specifically, the dew point in the heating step may be 15°C to 46°C.

In the heating step, the heating rate and dew point may satisfy the following Formula 2.

[Formula 2]

$$0.7 \leq \text{[Heating Rate (°C/min)]} / \text{[Dew Point (°C)]} \leq 2.5$$

When the relationship between the heating rate and the dew point is appropriately controlled, the insulating coating layer 30 and the surface layer 20 may be formed more suitably, and both insulation and magnetism may be further improved.

The soaking step is a step in which the steel sheet is maintained at a constant soaking temperature. The soaking temperature may be 700 to 850 °C. The soaking time may be 10 to 300 minutes. The dew point in the soaking step may be 10 °C or higher. By controlling the aforementioned heating step and dew point temperature, the insulating coating layer 30 and the surface layer 20 may be appropriately formed. More specifically, the dew point in the soaking step may be between 10 and 50°C.

A motor core according to an embodiment of the present invention includes a rotor formed by stacking a plurality of non-oriented electrical steel sheets and a stator formed by stacking a plurality of non-oriented electrical steel sheets, wherein the non-oriented electrical steel sheet in the rotor includes, in wt%, Si: 2.8 to 4.0%, Al: 0.5 to 1.7%, and Mn: 0.3 to 2.0%, with the balance being Fe and inevitable impurities, and the non-oriented electrical steel sheet in the stator includes, in wt%, Si: 2.8 to 4.0%, Al: 0.5 to 1.7%, and Mn: 0.3 to 2.0%, with the balance being Fe and inevitable impurities, and a surface layer exists from the surface of the steel sheet toward the inside of the steel sheet, and an insulating coating layer exists on the surface of the steel sheet, and the insulating coating layer and the surface layer have a weight ratio (Al/Mn) of Al to Mn of 1 to 10.

Since the characteristics of the rotor are the same as those of the non-oriented electrical steel sheet before SRA annealing, and the characteristics of the stator are the same as those of the non-oriented electrical steel sheet after SRA annealing, a detailed description thereof will be omitted.

In an embodiment of the present invention, the rotor and the stator may be manufactured simultaneously using the same non-oriented electrical steel sheet, and manufacturing efficiency is further improved.

By manufacturing the rotor and the stator simultaneously using the same non-oriented electrical steel sheet, the difference in the content of Si, Al, and Mn between the non-oriented electrical steel sheets included in the stator and the rotor may be 0.2% or less, respectively.

The motor core may have an insulating film interposed between the steel sheets. Since the insulating film is widely known, a detailed description thereof will be omitted.

Hereinafter, preferred examples of the present invention and comparative examples will be described. However, the following examples are only preferred embodiments of the present invention, and the present invention is not limited to the following examples.

Example 1

A slab was manufactured with the composition shown in Table 1 below. C, S, N, Ti, Nb, and V other than those listed in Table 1 were all controlled to 0.003 wt% or less, and the balance was Fe.

The slab was heated to 1,150°C and hot-finished rolled at 850°C to manufactured a hot-rolled sheet with a thickness of 2.0 mm. The hot-rolled hot-rolled sheet was annealed at 1,100°C for 4 minutes and then pickled. Subsequently, cold rolling was performed to manufacture a 0.25 mm cold-rolled sheet, and cold-rolled plate annealing was performed under the conditions summarized in Table 2 below.

After annealing the cold-rolled sheet (that is, rotor), the properties of the steel sheet are shown in Table 2.

The grain size was examined using an optical microscope, and the fraction of unrecrystallized grains was measured using SEM-EBSD.

The tensile strength was measured using a tensile tester according to JIS standards.

Subsequently, the annealed cold-rolled sheet was coated with a Cr-free phosphate-based insulating film composition, and after forming the insulating film, SRA annealing was performed under the conditions in Table 3. The properties of the steel sheet after SRA annealing (that is, stator) are shown in FIG. 3.

The insulation was measured using a Franklin tester.

The magnetism was measured using a Single Sheet tester.

The components of the insulating coating layer and the surface layer were measured using GDS. The amounts of Al and Mn were defined by the area of the GDS peaks.

(Table 1)

| Classification | Si | Al | Mn | P | Cu | Cr | Resistivity |
|---|---|---|---|---|---|---|---|
| 1 | 3.4 | 1.2 | 1.2 | 0.003 | 0.08 | 0.05 | 73 |
| 2 | 3.4 | 1.2 | 1.2 | 0.003 | 0.08 | 0.05 | 73 |
| 3 | 3.4 | 1.2 | 1.2 | 0.010 | 0.08 | 0.05 | 73 |
| 4 | 3.4 | 1.2 | 1.2 | 0.004 | 0.08 | 0.05 | 73 |
| 5 | 3.2 | 0.9 | 1.5 | 0.004 | 0.05 | 0.05 | 69 |
| 6 | 3.2 | 0.9 | 1.5 | 0.004 | 0.05 | 0.05 | 69 |
| 7 | 3.6 | 0.7 | 1.5 | 0.004 | 0.10 | 0.15 | 72 |
| 8 | 3.6 | 0.7 | 1.5 | 0.004 | 0.10 | 0.15 | 72 |
| 9 | 3.6 | 0.7 | 1.5 | 0.004 | 0.10 | 0.15 | 72 |
| 10 | 2.8 | 1.4 | 2.0 | 0.004 | 0.15 | 0.15 | 74 |

(continued)

| Classification | Si | Al | Mn | P | Cu | Cr | Resistivity |
|---|---|---|---|---|---|---|---|
| 11 | 2.8 | 1.4 | 2.0 | 0.004 | 0.15 | 0.15 | 74 |
| 12 | 2.8 | 1.2 | 1.9 | 0.001 | 0.127 | 0.083 | 70 |
| 13 | 2.9 | 1.5 | 1.0 | 0.005 | 0.188 | 0.171 | 71 |
| 14 | 3.0 | 0.6 | 0.9 | 0.001 | 0.165 | 0.286 | 62 |
| 15 | 3.1 | 0.8 | 1.9 | 0.001 | 0.038 | 0.451 | 71 |
| 16 | 3.2 | 1.4 | 2.0 | 0.001 | 0.147 | 0.219 | 79 |
| 17 | 3.3 | 0.5 | 1.6 | 0.005 | 0.18 | 0.232 | 68 |
| 18 | 3.4 | 0.6 | 0.5 | 0.001 | 0.045 | 0.35 | 64 |
| 19 | 3.5 | 0.6 | 1.7 | 0.005 | 0.062 | 0.378 | 72 |
| 20 | 3.6 | 0.7 | 0.6 | 0.001 | 0.07 | 0.171 | 67 |
| 21 | 3.7 | 1.5 | 1.8 | 0.001 | 0.146 | 0.121 | 84 |
| 22 | 3.8 | 0.5 | 0.4 | 0.005 | 0.118 | 0.301 | 66 |
| 23 | 3.9 | 0.6 | 0.5 | 0.003 | 0.192 | 0.241 | 69 |
| 24 | 4.0 | 1.6 | 0.3 | 0.004 | 0.076 | 0.054 | 79 |
| 25 | 2.7 | 1.5 | 0.5 | 0.003 | 0.178 | 0.414 | 67 |
| 26 | 4.1 | 1.6 | 0.7 | 0.004 | 0.126 | 0.389 | 85 |
| 27 | 3.5 | 0.4 | 0.7 | 0.003 | 0.076 | 0.28 | 63 |
| 28 | 3.0 | 1.8 | 1.9 | 0.002 | 0.101 | 0.022 | 79 |
| 29 | 3.5 | 1.7 | 0.2 | 0.003 | 0.015 | 0.01 | 73 |
| 30 | 3.7 | 1.4 | 2.1 | 0.002 | 0.078 | 0.122 | 82 |
| 31 | 3.1 | 1.7 | 1.5 | 0.0007 | 0.184 | 0.295 | 79 |
| 32 | 3.2 | 1.5 | 0.8 | 0.013 | 0.145 | 0.044 | 72 |
| 33 | 4.0 | 1.6 | 1.1 | 0.001 | 0.003 | 0.035 | 83 |
| 34 | 3.1 | 1.7 | 1.9 | 0.002 | 0.21 | 0.077 | 80 |
| 35 | 3.5 | 0.5 | 1.4 | 0.002 | 0.189 | 0.007 | 67 |
| 36 | 4.0 | 0.9 | 1.7 | 0.003 | 0.089 | 0.51 | 82 |
| 37 | 2.8 | 0.1 | 0.3 | 0.005 | 0.023 | 0.05 | 48 |
| 38 | 3.0 | 0.6 | 1.7 | 0.005 | 0.101 | 0.228 | 65 |
| 39 | 3.4 | 1.1 | 0.5 | 0.001 | 0.135 | 0.157 | 69 |
| 40 | 3.0 | 1.6 | 0.6 | 0.003 | 0.155 | 0.438 | 72 |
| 41 | 3.6 | 0.7 | 0.7 | 0.001 | 0.103 | 0.212 | 68 |
| 42 | 4.0 | 1.5 | 1.9 | 0.005 | 0.174 | 0.439 | 90 |
| 43 | 4.0 | 0.9 | 1.6 | 0.005 | 0.172 | 0.303 | 80 |
| 44 | 3.2 | 0.8 | 0.5 | 0.002 | 0.04 | 0.325 | 63 |
| 45 | 3.6 | 1.7 | 1.1 | 0.003 | 0.031 | 0.498 | 82 |
| 46 | 3.5 | 1.1 | 1.2 | 0.001 | 0.194 | 0.063 | 73 |
| 47 | 3.5 | 0.8 | 1.4 | 0.003 | 0.173 | 0.032 | 71 |
| 48 | 3.3 | 0.6 | 0.9 | 0.005 | 0.2 | 0.139 | 64 |
| 49 | 3.4 | 1.6 | 1.8 | 0.004 | 0.185 | 0.429 | 83 |

(continued)

| Classification | Si | Al | Mn | P | Cu | Cr | Resistivity |
|---|---|---|---|---|---|---|---|
| 50 | 2.9 | 0.8 | 1.5 | 0.002 | 0.099 | 0.263 | 66 |
| 51 | 3.9 | 0.8 | 1.0 | 0.001 | 0.074 | 0.478 | 75 |

(Table 2)

| | Cold-Rolled Sheet Annealing | | After Annealing Cold-Rolled Sheet | | | | | |
|---|---|---|---|---|---|---|---|---|
| Classifi cation | Annealin g Tempera ture (°C) | Annea ling Time (secon ds) | Aver age Grai n Size (μm) | Unrecrysta llization Fraction (%) | [Form ula 1] | Tensi le Stre ngth Rolli ng Direc tion (MP a) | Tens ile Stre ngth 45 Degrees (MP a) | Stren gth Unifor mity |
| 1 | 780 | 30 | 15 | 10 | 45 | 650 | 682 | 95.3 |
| 2 | 810 | 45 | 25 | 7 | 161 | 640 | 650 | 98.5 |
| 3 | 835 | 48 | 22 | 15 | 70 | 665 | 680 | 97.8 |
| 4 | 840 | 45 | 26 | 15 | 78 | 651 | 659 | 98.8 |
| 5 | 900 | 45 | 35 | 2 | 788 | 615 | 632 | 97.3 |
| 6 | 815 | 48 | 20 | 5 | 192 | 645 | 654 | 98.6 |
| 7 | 795 | 50 | 18 | 12 | 75 | 665 | 678 | 98.1 |
| 8 | 835 | 50 | 25 | 6 | 208 | 648 | 658 | 98.5 |
| 9 | 825 | 46 | 22 | 8 | 127 | 657 | 669 | 98.2 |
| 10 | 830 | 35 | 25 | 17 | 51 | 638 | 649 | 98.3 |
| 11 | 825 | 70 | 28 | 3 | 653 | 632 | 655 | 96.5 |
| 12 | 777 | 45 | 18 | 13 | 62 | 638 | 651 | 98.0 |
| 13 | 847 | 43 | 19 | 9 | 91 | 635 | 641 | 99.1 |
| 14 | 752 | 34 | 20 | 3 | 227 | 630 | 641 | 98.3 |
| 15 | 785 | 32 | 15 | 4 | 120 | 648 | 651 | 99.5 |
| 16 | 790 | 52 | 20 | 8 | 130 | 635 | 648 | 98.0 |
| 17 | 800 | 26 | 20 | 4 | 130 | 647 | 658 | 98.3 |
| 18 | 845 | 40 | 28 | 4 | 280 | 650 | 661 | 98.3 |
| 19 | 832 | 40 | 16 | 11 | 58 | 635 | 648 | 98.0 |
| 20 | 791 | 48 | 28 | 8 | 168 | 658 | 667 | 98.7 |
| 21 | 825 | 39 | 14 | 12 | 46 | 660 | 671 | 98.4 |
| 22 | 824 | 48 | 19 | 9 | 101 | 698 | 705 | 99.0 |
| 23 | 771 | 18 | 21 | 7 | 54 | 689 | 701 | 98.3 |
| 24 | 755 | 49 | 23 | 12 | 94 | 701 | 712 | 98.5 |
| 25 | 822 | 26 | 17 | 4 | 111 | 620 | 635 | 97.6 |
| 26 | 803 | 42 | 18 | 7 | 108 | 658 | 678 | 97.1 |
| 27 | 756 | 38 | 22 | 6 | 139 | 624 | 634 | 98.4 |
| 28 | 812 | 28 | 25 | 12 | 58 | 637 | 664 | 95.9 |
| 29 | 812 | 55 | 12 | 13 | 51 | 624 | 634 | 98.4 |
| 30 | 793 | 51 | 25 | 6 | 213 | 637 | 657 | 97.0 |

(continued)

| | Cold-Rolled Sheet Annealing | | After Annealing Cold-Rolled Sheet | | | | | |
|---|---|---|---|---|---|---|---|---|
| Classification | Annealing Temperature (°C) | Annealing Time (seconds) | Average Grain Size (μm) | Unrecrystallization Fraction (%) | [Formula 1] | Tensile Strength Rolling Direction (MPa) | Tensile Strength 45 Degrees (MPa) | Strength Uniformity |
| 31 | 803 | 27 | 30 | 13 | 62 | 638 | 648 | 98.5 |
| 32 | 770 | 27 | 28 | 4 | 189 | 640 | 649 | 98.6 |
| 33 | 755 | 20 | 28 | 6 | 93 | 638 | 647 | 98.6 |
| 34 | 802 | 46 | 16 | 6 | 123 | 637 | 648 | 98.3 |
| 35 | 773 | 23 | 28 | 11 | 59 | 648 | 658 | 98.5 |
| 36 | 761 | 25 | 20 | 5 | 100 | 678 | 684 | 99.1 |
| 37 | 847 | 57 | 25 | 13 | 110 | 621 | 647 | 96.0 |
| 38 | 650 | 13 | 7 | 10 | 9 | 637 | 647 | 98.5 |
| 39 | 900 | 34 | 80 | 5 | 544 | 652 | 661 | 98.6 |
| 40 | 890 | 5 | 15 | 15 | 5 | 641 | 654 | 98.0 |
| 41 | 826 | 70 | 29 | 1 | 2030 | 650 | 661 | 98.3 |
| 42 | 765 | 20 | 13 | 8 | 33 | 678 | 687 | 98.7 |
| 43 | 847 | 55 | 30 | 3 | 550 | 689 | 695 | 99.1 |
| 44 | 754 | 26 | 29 | 9 | 84 | 639 | 648 | 98.6 |
| 45 | 815 | 53 | 11 | 10 | 58 | 647 | 657 | 98.5 |
| 46 | 784 | 57 | 23 | 8 | 164 | 648 | 658 | 98.5 |
| 47 | 760 | 14 | 29 | 13 | 31 | 652 | 661 | 98.6 |
| 48 | 766 | 46 | 29 | 10 | 133 | 641 | 652 | 98.3 |
| 49 | 813 | 23 | 23 | 9 | 59 | 635 | 648 | 98.0 |
| 50 | 769 | 44 | 19 | 12 | 70 | 631 | 640 | 98.6 |
| 51 | 764 | 57 | 15 | 7 | 122 | 668 | 678 | 98.5 |

(Table 3)

| | SRA | | | | After SRA | | | |
|---|---|---|---|---|---|---|---|---|
| Classification | 300-500 Heating Rate (°C/min) | Heating Step Dew Point (°C) | Soaking Step Dew Point (°C) | [Formula 2] | Al/Mn Ratio in Insulating Coating Layer and Surface Layer | Insulation Value (mA) | Iron Loss (W10/400, W/kg) | Remarks |
| 1 | 15 | 15 | 15 | 1 | 5 | 620 | 10.25 | Inventive Example |
| 2 | 20 | 10 | 16 | 2 | 3 | 650 | 9.45 | Inventive Example |
| 3 | 25 | 10 | 10 | 2.5 | 4 | 600 | 10.05 | Inventive Example |

(continued)

| | SRA | | | | After SRA | | | |
| Classific ation | 300-500 Heati ng Rate (°C/ min) | Heat ing Step Dew Poin t (°C) | Soak ing Step Dew Point (°C) | [For mula 2] | Al/Mn Ratio in Insula ting Coati ng Layer and Surface Layer | Insula tion Value (mA) | Iron Loss (W10/40 0, W/kg) | Remarks |
| --- | --- | --- | --- | --- | --- | --- | --- | --- |
| 4 | 15 | 30 | 12 | 0.5 | 6 | 400 | 11.11 | Inventive Example |
| 5 | 25 | 20 | 10 | 1.3 | 4 | 700 | 10.35 | Inventive example |
| 6 | 22 | 25 | 15 | 0.9 | 5 | 680 | 9.87 | Inventive example |
| 7 | 18 | 25 | 8 | 0.7 | 3 | 640 | 9.57 | Inventive example |
| 8 | 5 | 30 | 7 | 0.2 | 22 | 400 | 11.32 | Comparative Example |
| 9 | 25 | 8 | 25 | 3.1 | 18 | 850 | 10.35 | Comparative Example |
| 10 | 10 | 10 | 15 | 1 | 4 | 620 | 9.95 | Inventive Example |
| 11 | 30 | 35 | 10 | 0.9 | 3 | 580 | 10.59 | Inventive Example |
| 12 | 44 | 44 | 12 | 1 | 2 | 610 | 9.89 | Inventive Example |
| 13 | 33 | 27 | 10 | 1.2 | 3 | 520 | 9.85 | Inventive Example |
| 14 | 45 | 27 | 10 | 1.7 | 4 | 680 | 9.84 | Inventive Example |
| 15 | 37 | 40 | 15 | 0.9 | 3 | 625 | 9.28 | Inventive Example |
| 16 | 38 | 44 | 12 | 0.9 | 3 | 700 | 9.68 | Inventive Example |
| 17 | 46 | 23 | 14 | 2 | 5 | 680 | 9.78 | Inventive Example |
| 18 | 10 | 14 | 15 | 0.7 | 3 | 680 | 9.98 | Inventive Example |
| 19 | 41 | 34 | 15 | 1.2 | 5 | 620 | 9.85 | Inventive Example |
| 20 | 31 | 36 | 17 | 0.9 | 6 | 580 | 9.65 | Inventive Example |
| 21 | 24 | 10 | 10 | 2.4 | 7 | 570 | 9.58 | Inventive Example |
| 22 | 29 | 41 | 10 | 0.7 | 7 | 640 | 9.47 | Inventive Example |
| 23 | 32 | 38 | 8 | 0.8 | 3 | 620 | 9.89 | Inventive Ex- ample |

(continued)

| | SRA | | | | After SRA | | | |
| Classification | 300-500 Heating Rate (°C/min) | Heating Step Dew Point (°C) | Soaking Step Dew Point (°C) | [Formula 2] | Al/Mn Ratio in Insulating Coating Layer and Surface Layer | Insulation Value (mA) | Iron Loss (W10/400, W/kg) | Remarks |
|---|---|---|---|---|---|---|---|---|
| 24 | 33 | 37 | 19 | 0.9 | 2 | 670 | 9.78 | Inventive Example |
| 25 | 40 | 49 | 8 | 0.8 | 12 | 810 | 11.58 | Comparative Example |
| 26 | 28 | 11 | 15 | 2.5 | 15 | 870 | 11.48 | Comparative Example |
| 27 | 34 | 48 | 15 | 0.7 | 11 | 910 | 11.75 | Comparative Example |
| 28 | 23 | 16 | 14 | 1.4 | 18 | 810 | 11.14 | Comparative Example |
| 29 | 27 | 29 | 19 | 0.9 | 15 | 840 | 11.15 | Comparative Example |
| 30 | 39 | 36 | 17 | 1.1 | 12 | 820 | 11.89 | Comparative Example |
| 31 | 27 | 33 | 12 | 0.8 | 6 | 620 | 10.57 | Inventive Example |
| 32 | 43 | 40 | 15 | 1.1 | 2 | 670 | 10.51 | Inventive Example |
| 33 | 36 | 25 | 18 | 1.4 | 5 | 680 | 10.78 | Inventive Example |
| 34 | 25 | 21 | 16 | 1.2 | 7 | 620 | 10.56 | Inventive Example |
| 35 | 17 | 12 | 15 | 1.4 | 2 | 680 | 10.35 | Inventive Example |
| 36 | 26 | 24 | 12 | 1.1 | 4 | 670 | 10.21 | Inventive Example |
| 37 | 38 | 28 | 11 | 1.4 | 15 | 880 | 11.59 | Comparative Example |
| 38 | 30 | 24 | 10 | 1.3 | 7 | 650 | 10.59 | Inventive Example |
| 39 | 48 | 39 | 15 | 1.2 | 3 | 620 | 10.24 | Inventive Example |
| 40 | 50 | 34 | 17 | 1.5 | 4 | 550 | 10.14 | Inventive Example |
| 41 | 30 | 16 | 15 | 1.9 | 7 | 670 | 10.08 | Inventive Example |
| 42 | 30 | 17 | 22 | 1.8 | 5 | 610 | 10.25 | Inventive Example |
| 43 | 47 | 48 | 15 | 1 | 7 | 620 | 10.35 | Inventive Example |

(continued)

| | | | | | | | | |
|---|---|---|---|---|---|---|---|---|
| 33 | 36 | 25 | 18 | 1.4 | 5 | 680 | 10.78 | Inventive Example |
| 44 | 8 | 10 | 17 | 0.8 | 15 | 840 | 11.36 | Comparative Example |
| 45 | 55 | 39 | 15 | 1.4 | 12 | 860 | 11.78 | Comparative Example |
| 46 | 12 | 5 | 16 | 2.4 | 18 | 870 | 11.58 | Comparative Example |
| 47 | 37 | 55 | 15 | 0.7 | 19 | 910 | 11.89 | Comparative Example |
| 48 | 36 | 39 | 40 | 0.9 | 16 | 870 | 11.56 | Comparative Example |
| 49 | 19 | 15 | 45 | 1.3 | 12 | 900 | 11.78 | Comparative Example |
| 50 | 13 | 31 | 12 | 0.4 | 10 | 640 | 10.15 | Inventive Example |
| 51 | 45 | 11 | 10 | 4.1 | 10 | 620 | 10.21 | Inventive Example |

As shown in Table 1 to Table T3, it can be confirmed that when the alloy composition and surface layer characteristics are appropriately controlled, core loss and insulation are simultaneously improved.

In addition, it can be confirmed that the tensile strength and tensile strength uniformity before SRA may be secured after cold-rolled sheet annealing.

In the case of the inventive example, Mn-O was mainly present in the insulating coating layer, and Al-O was mainly present in the surface layer. When the Al/Mn ratio exceeded 10 in terms of the area ratio of GDS, Mn oxide was hardly present in the insulating coating layer and the surface layer. When Mn-O was sufficiently formed in the insulating coating layer and the surface layer, the Al/Mn value was within an appropriate range, resulting in excellent insulation and magnetism.

The present invention may be embodied in many different forms, and should not be construed as being limited to the disclosed embodiments. In addition, it will be understood by those skilled in the art that various changes in form and details may be made thereto without departing from the technical spirit and essential features of the present invention. Therefore, it is to be understood that the above-described embodiments are for illustrative purposes only, and the scope of the present invention is not limited thereto.

**Claims**

1. A non-oriented electrical steel sheet comprising:

   in wt%, Si: 2.8 to 4.0%, Al: 0.5 to 1.7%, and Mn: 0.3 to 2.0%, with the balance being Fe and inevitable impurities,
   wherein a surface layer exists from a surface of the steel sheet toward the inside of the steel sheet,
   an insulating coating layer exists on the surface of the steel sheet, and
   the insulating coating layer and the surface layer have a weight ratio (Al/Mn) of Al to Mn of 1 to 10.

2. The non-oriented electrical steel sheet of claim 1, further comprising
   one or more of C, N, S, Ti, Nb, and V, each in an amount of 0.005 wt% or less.

3. The non-oriented electrical steel sheet of claim 1, further comprising
   one or more of P: 0.005 wt% or less, Cu: 0.005 to 0.2 wt%, Cr: 0.01 to 0.5 wt%, Sn: 0.06 wt% or less, Sb: 0.06 wt% or less, Ni: 0.05 wt% or less, and Zn: 0.01 wt% or less.

4. The non-oriented electrical steel sheet of claim 1, further comprising
   0.200 wt% or less in each or a combined amount of one or two or more of Bi, Pb, Ge, and As.

5. The non-oriented electrical steel sheet of claim 1, further comprising
one or more of Mo: 0.03 wt% or less, B: 0.0050 wt% or less, Ca: 0.0050 wt% or less, and Mg: 0.0050 wt% or less.

6. The non-oriented electrical steel sheet of claim 1, wherein
the non-oriented electrical steel sheet has a specific resistance of 50 $\mu\Omega$•cm or more.

7. The non-oriented electrical steel sheet of claim 1, wherein
an average grain size is 50 to 200 $\mu$m.

8. A method for manufacturing a non-oriented electrical steel sheet, comprising:

   a step of hot rolling a slab including, in wt%, Si: 2.8 to 4.0%, Al: 0.5 to 1.7%, and Mn: 0.3 to 2.0%, with the balance being Fe and inevitable impurities, to manufacture a hot-rolled sheet;
   a step of cold rolling the hot-rolled sheet to manufacture a cold-rolled sheet;
   a cold-rolled sheet annealing step of annealing the cold-rolled sheet;
   a step of forming an insulating coating layer on the annealed cold-rolled sheet; and
   a step of stress relief annealing the steel sheet with the insulating coating layer formed thereon,
   wherein the step of stress relief annealing includes a heating step of heating the steel sheet to a soaking temperature and a soaking step,
   a heating rate in a temperature range of 300 to 500°C in the heating step is 10 to 50°C/min, and
   a dew point of the heating step is 10°C to 50°C, and a dew point of the soaking step is 0 to 35°C.

9. The method for manufacturing the non-oriented electrical steel sheet of claim 8, wherein
the slab further includes one or more of C, N, S, Ti, Nb, and V, each in an amount of 0.005 wt% or less.

10. The method for manufacturing the non-oriented electrical steel sheet of claim 8, wherein
the slab further includes one or more of P: 0.005 wt% or less, Cu: 0.005 to 0.2 wt%, Cr: 0.01 to 0.5 wt%, Sn: 0.06 wt% or less, Sb: 0.06 wt% or less, Ni: 0.05 wt% or less, and Zn: 0.01 wt% or less.

11. The method for manufacturing the non-oriented electrical steel sheet of claim 8, wherein
the slab further includes 0.200 wt% or less in each or a combined amount of one or two or more of Bi, Pb, Ge, and As.

12. The method for manufacturing the non-oriented electrical steel sheet of claim 8, wherein
the slab further includes one or more of Mo: 0.03 wt% or less, B: 0.0050 wt% or less, Ca: 0.0050 wt% or less, and Mg: 0.0050 wt% or less.

13. The method for manufacturing the non-oriented electrical steel sheet of claim 8, wherein
in the cold-rolled sheet annealing step, an annealing temperature is 750 to 850°C, and an annealing time is 10 to 60 seconds.

14. The method for manufacturing the non-oriented electrical steel sheet of claim 8, wherein
after the annealing step of the cold-rolled sheet, the annealed cold-rolled sheet has an average grain size of 10 to 30 $\mu$m.

15. The method for manufacturing the non-oriented electrical steel sheet of claim 8, wherein
after the annealing step of the cold-rolled sheet, an unrecrystallization fraction is 1 to 15 area%.

16. The method for manufacturing the non-oriented electrical steel sheet of claim 8, wherein
after the annealing step of the cold-rolled sheet, a surface layer exists from a surface of the cold-rolled sheet toward the inside of the cold-rolled sheet, and a thickness of the surface layer is 0.0001 to 0.2 $\mu$m.

17. The method for manufacturing the non-oriented electrical steel sheet of claim 8, wherein after the annealing step of the cold-rolled sheet, Formula 1 is satisfied:

50 ≤ [Average Grain Size ($\mu$m)] × [Cold-Rolled Sheet Annealing Time (seconds)]/[Unrecrystallized Area Fraction (%)] ≤ 500.    [Formula 1]

**18.** The method for manufacturing the non-oriented electrical steel sheet of claim 8, wherein
a heating rate and a dew point in the heating step satisfy Formula 2:

[Formula 2]

$$0.7 \leq [\text{Heating Rate (°C/min)}] / [\text{Dew Point (°C)}] \leq 2.5.$$

**19.** A motor core comprising:

a rotor formed by stacking a plurality of non-oriented electrical steel sheets and a stator formed by stacking a plurality of non-oriented electrical steel sheets,
wherein the non-oriented electrical steel sheet in the rotor includes, in wt%, Si: 2.8 to 4.0%, Al: 0.5 to 1.7%, and Mn: 0.3 to 2.0%, with the balance being Fe and inevitable impurities,
the non-oriented electrical steel sheet in the stator includes, in wt%, Si: 2.8 to 4.0%, Al: 0.5 to 1.7%, and Mn: 0.3 to 2.0%, with the balance being Fe and inevitable impurities, a surface layer exists from a surface of the steel sheet in an inward direction of the steel sheet, and an insulating coating layer exists on the surface of the steel sheet, and
the insulating coating layer and the surface layer have a weight ratio (Al/Mn) of Al to Mn of 1 to 10.

**20.** The motor core of claim 19, wherein
the non-oriented electrical steel sheet in the rotor has an average grain size of 10 to 30 $\mu$m.

**21.** The motor core of claim 19, wherein
a difference in Si, Al, and Mn contents between the non-oriented electrical steel sheets included in the stator and the rotor is each 0.2 wt% or less.

# FIG. 1

100

## INTERNATIONAL SEARCH REPORT

| International application No. |
|---|
| **PCT/KR2023/019106** |

**A. CLASSIFICATION OF SUBJECT MATTER**

**C22C 38/02**(2006.01)i; **C22C 38/04**(2006.01)i; **C22C 38/06**(2006.01)i; **C22C 38/58**(2006.01)i; **C22C 38/12**(2006.01)i; **C21D 8/12**(2006.01)i; **B32B 15/01**(2006.01)i

According to International Patent Classification (IPC) or to both national classification and IPC

**B. FIELDS SEARCHED**

Minimum documentation searched (classification system followed by classification symbols)

C22C 38/02(2006.01); B21B 1/22(2006.01); C21D 8/04(2006.01); C21D 8/12(2006.01); C22C 38/00(2006.01); C22C 38/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성(non-oriented), 전기강판(electromagnetic steel sheet), 규소(silicon), 망간(manganese), 알루미늄(aluminum), 응력 제거 소둔(stress relief annealing), 피막(coating), 이슬점(dew point)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0056391 A (JFE STEEL CORPORATION) 18 May 2021 (2021-05-18)<br>See paragraphs [0026], [0058] and [0105]-[0107] and claims 1-2, 4 and 6-7. | 1-21 |
| Y | KR 10-1998-0014323 A (POHANG IRON & STEEL CO., LTD.) 25 May 1998 (1998-05-25)<br>See paragraphs [0002] and [0010]. | 1-21 |
| A | KR 10-2022-0089084 A (POSCO) 28 June 2022 (2022-06-28)<br>See paragarph [0121] and figure 1. | 1-21 |
| A | WO 2018-025941 A1 (NIPPON STEEL & SUMITOMO METAL CORPORATION) 08 February 2018 (2018-02-08)<br>See claims 1 and 6 and figure 1. | 1-21 |
| A | JP 2018-141206 A (NIPPON STEEL & SUMITOMO METAL) 13 September 2018 (2018-09-13)<br>See paragraph [0071] and figure 1. | 1-21 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 February 2024** | **23 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | International application No. |
|---|---|
| | **PCT/KR2023/019106** |

| Patent document cited in search report | Publication date (day/month/year) | Patent family member(s) | Publication date (day/month/year) |
|---|---|---|---|
| KR     10-2021-0056391     A | 18 May 2021 | BR      112021006711     A2 | 27 July 2021 |
| | | BR      112021006711     B1 | 24 October 2023 |
| | | CA           3116571     A1 | 07 May 2020 |
| | | CA           3116571     C | 17 January 2023 |
| | | CN         112930412     A | 08 June 2021 |
| | | EP           3859032     A1 | 04 August 2021 |
| | | EP           3859032     B1 | 29 March 2023 |
| | | JP        2021-036075     A | 04 March 2021 |
| | | JP           6866935     B2 | 28 April 2021 |
| | | JP    WO2020-090160     A1 | 15 February 2021 |
| | | KR         10-2516331     B1 | 31 March 2023 |
| | | MX         2021004862     A | 15 June 2021 |
| | | TW         202018102     A | 16 May 2020 |
| | | TW         202122602     A | 16 June 2021 |
| | | TW           I732315     B | 01 July 2021 |
| | | TW           I768605     B | 21 June 2022 |
| | | US         11525169     B2 | 13 December 2022 |
| | | US         11718891     B2 | 08 August 2023 |
| | | US      2021-0371948     A1 | 02 December 2021 |
| | | US      2023-0065674     A1 | 02 March 2023 |
| | | WO      2020-090160     A1 | 07 May 2020 |
| KR     10-1998-0014323     A | 25 May 1998 | KR         10-0276281     B1 | 15 December 2000 |
| KR     10-2022-0089084     A | 28 June 2022 | KR         10-2513317     B1 | 22 March 2023 |
| WO         2018-025941     A1 | 08 February 2018 | BR      112018075826     A2 | 19 March 2019 |
| | | BR      112018075826     B1 | 16 August 2022 |
| | | CN         109563583     A | 02 April 2019 |
| | | CN         109563583     B | 15 October 2021 |
| | | EP           3495525     A1 | 12 June 2019 |
| | | EP           3495525     A4 | 01 January 2020 |
| | | EP           3495525     B1 | 06 April 2022 |
| | | JP           6690714     B2 | 28 April 2020 |
| | | JP    WO2018-025941     A1 | 11 April 2019 |
| | | KR   10-2019-0003783     A | 09 January 2019 |
| | | KR         10-2227328     B1 | 12 March 2021 |
| | | PL           3495525     T3 | 20 June 2022 |
| | | RS             63177     B1 | 30 June 2022 |
| | | TW         201812051     A | 01 April 2018 |
| | | TW           I643965     B | 11 December 2018 |
| | | US         11295881     B2 | 05 April 2022 |
| | | US      2019-0228891     A1 | 25 July 2019 |
| JP         2018-141206     A | 13 September 2018 | JP           6870381     B2 | 12 May 2021 |

Form PCT/ISA/210 (patent family annex) (July 2022)